# EUROPEAN PATENT SPECIFICATION

(11) **EP 2 261 643 B1**
(45) Date of publication and mention of the grant of the patent: **13.08.2014**
(21) Application number: 10162782.6
(22) Date of filing: 13.05.2010
(51) Int. Cl.: G01N 21/85, B07C 5/342, G01B 11/25

(54) **Method for grading food products able to roll on their outer surface, such as certain fruits and vegetables**
Verfahren zur Klassierung von Lebensmittelprodukten, die auf ihre Aussenfläche zu rollen fähig sind, wie manche Obst- und Gemüsesorten
Procédé pour classer produits alimentaires aptes à rouler sur leur surface exterieure, tels que certains genres de fruits et légumes.

(30) Priority: 09.06.2009 IT VR20090082
(43) Date of publication of application: 15.12.2010
(73) Proprietor: Microtec S.r.l., 39042 Bressanone (Bolzano) (IT)
(72) Inventor: Giudiceandrea, Federico, 39042, Bressanone (Bolzano) (IT); Ursella, Enrico, 30174, Mestre (Venezia) (IT)
(74) Representative: Ponchiroli, Simone

(56) References cited:
- EP-A1- 1 830 176
- WO-A1-91/04803
- WO-A1-96/14557
- CN-A- 1 664 568
- CN-C- 100 547 394
- FR-A1- 2 921 719
- US-A- 5 339 963

## Description

This invention relates to a method for grading substantially rigid food products able to roll on their outer surface, such as fruit and vegetables. In particular, this invention is intended for the fruit and vegetable sector for grading fruit and vegetables. Consequently, explicit reference is made to that sector below, although this invention may in any case be applied for grading food products of any type, provided that they are rigid and able to roll on their outer surface.

The term substantially rigid products is used herein to refer to food products able to preserve their shape during rolling, such as apples, pears, aubergines, cucumbers, etc. It does not refer to products which have a flexible structure, such as salad, chicory, etc.

This invention was invented in response to one of the most widespread problems in the sector of harvesting and marketing fruit and vegetables, that is to say, guaranteeing standards which are constant with the passage of time and uniform within each batch of products.

After harvesting, the products must be selected so that they can be divided into first or second category products, for subsequent sale to the ultimate consumer, or of inferior quality for sale to the preserved food industries or even for discarding as waste.

Normally, selection parameters consist of the shape and size of the products as well as their outer appearance which is an indication of the surface quality (that generic definition includes both the degree of ripeness and the presence of surface defects, if any, such as bruises or the like).

Consequently, through the years, the first selection method was manual sorting by skilled operators.

Then the development of automatic equipment began. As regards the evaluation of only the outer appearance, an example of an automated evaluation method is described in patent application VR2007A000104 by this same Applicant.

In contrast, regarding grading based on shape and size, a first type of prior art equipment bases selection on the weight of the individual food products. However, due to the different density which natural products may have, that solution did not prove able to guarantee a constant size of the products as required by consumers. Moreover, that solution was unable to manage, the weight being equal, different shapes (more or less flat, elongate, asymmetrical, etc.).

A second type of prior art equipment performs selection by passing the products on paths equipped with holes that have gradually increasing diameters, which are designed to extract the various products from the path starting with the smallest and leading up to the largest.

However, given the asymmetry of fruit and vegetable products, that solution also proved unsuitable, since the result was greatly dependent on the orientation adopted by the food products at the selection holes. Moreover, depending on the type of food product, the evaluation of its size cannot be separated from evaluation of its shape. Therefore, for each food product the optimum evaluation would involve joint evaluation of said aspects.

For example, regarding apples, as well as their overall volume, important parameters for evaluation may be their size measured parallel with the axis of the core (height), as well as their maximum diameter transversal to said axis (the equatorial diameter).

WO 91/04803 A1 discloses an apparatus for weighing, sizing and defect sorting of fruit comprising one or more singulators to form the fruit into one or more rows, a conveyor that is arranged to pass the rows of fruit underneath a charged couple device array camera, means to rotate each piece of fruit as it passes underneath the camera, and image processing means. By making the fruit rotate under the camera, different pictures of the surface of the fruit are acquired until almost the entire surface of the piece of fruit has been photographed. Processing the acquired photographs, fruits are then graded on the basis of different criteria which can relate to size, weight and colour.

CN 1 664 568 A discloses a system for measuring the fruit quality based on the picture information fusion technology, in which colour (by a colour camera) and near-infrared images (obtained with near-infrared structure light ray) of the fruit are acquired. Such images are then processed to get 3D information from images with near-infrared structure light ray and surface colour information from colour images. Moreover, acquired images are matched by means of forty-eight benchmarks in the viewing field. On this bases, some fruit quality index detection are made: size detection, coloured area detection, defect area detection and shape detection.

Finally, FR 2 921 719 A1 discloses a method for the construction of a model of a surface of a three-dimensional object. Such a method involves projecting a pattern on a three-dimensional surface, and acquiring and memorizing a two-dimensional image of the pattern projected on the surface and deformed by the surface. The deformed two-dimensional image is compared with a non-deformed two-dimensional image for a selection of preset colour and/or luminous intensity points of the pattern. A depth coordinate is calculated for each point of the pattern from the projection of the point on the surface. FR 2 921 719 A1 also discloses that, if a global model of the object is wanted, the method must be repeated for a plurality of adjacent surfaces of the object and that the global model must be reconstructed by means of overlapping areas of the acquired images using an image correlation technique.

In this situation, the technical purpose which forms the basis of this invention is to provide a method for grading substantially rigid food products able to roll on their outer surface, such as fruit and vegetables which overcomes the above-mentioned disadvantages.

In particular, the technical purpose of this invention is to provide a method for grading substantially rigid food products able to roll on their outer surface, such as fruit and vegetables, which allows accurate grading of the size and shape of the food products.

In particular, the technical purpose of this invention is to provide a method for grading substantially rigid food products able to roll on their outer surface, such as fruit and vegetables, which allows accurate grading of their quality based on the relative surface quality.

The technical purpose specified and the aims indicated are substantially achieved by a method for grading substantially rigid food products able to roll on their outer surface, such as fruit and vegetables, as described in **claim 1**.

Further features and the advantages of this invention are more apparent in the detailed description of several preferred, non-limiting embodiments of a method for grading substantially rigid food products able to roll on their outer surface, such as fruit and vegetables, illustrated in the accompanying drawings, in which:
- Figure 1 is a plan view of a first embodiment of a detection step which is part of the method according to this invention;
- Figure 2 is a plan view of a second embodiment of a detection step which is part of the method according to this invention;
- Figure 3 is a plan view of a third embodiment of a detection step which is part of the method according to this invention;
- Figure 4 is a plan view of a fourth embodiment of a detection step which is part of the method according to this invention; and
- Figure 5 is a side view of an operating step of feeding the food products according to this invention.

With reference to the accompanying drawings the numeral 1 generically denotes the food products able to roll on their outer surface, which in the case illustrated are represented by apples. Moreover, the numerals 1 a, 1 b, 1 c denote said products based on their orientation relative to the observation point: the numeral 1 a for apples shown in side view, the numeral 1 b for apples whose upper face with the stalk is shown, and the numeral 1 c for apples whose lower face on the opposite end to the face with the stalk is shown.

The grading method according to this invention comprises first the operating step of feeding each food product 1 along a movement path, making it roll on its outer surface. In particular, in the most general embodiment the rolling step may be carried out in such a way as to make the food product 1 rotate over itself about one or more axes of rotation.

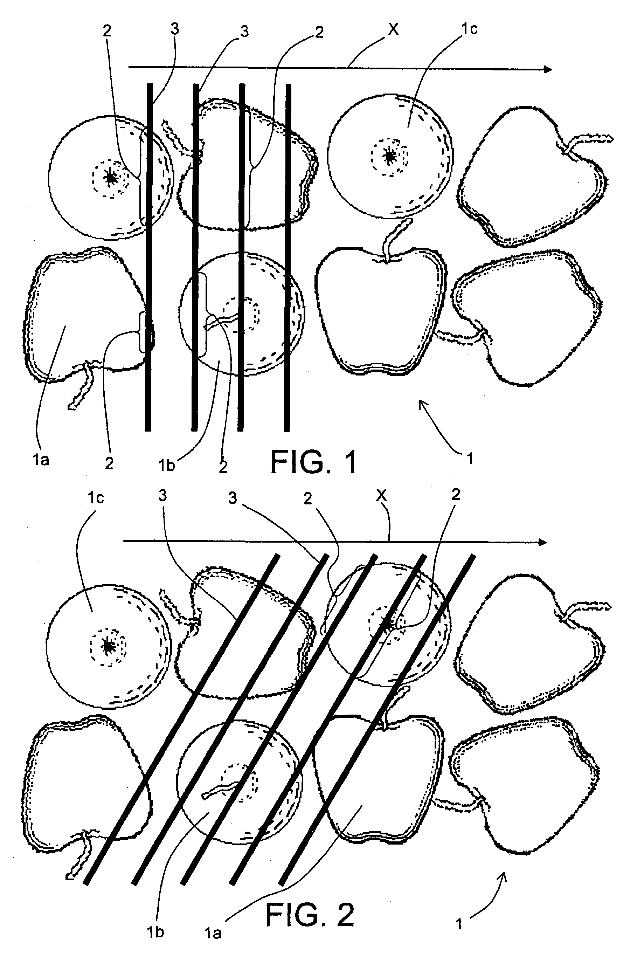

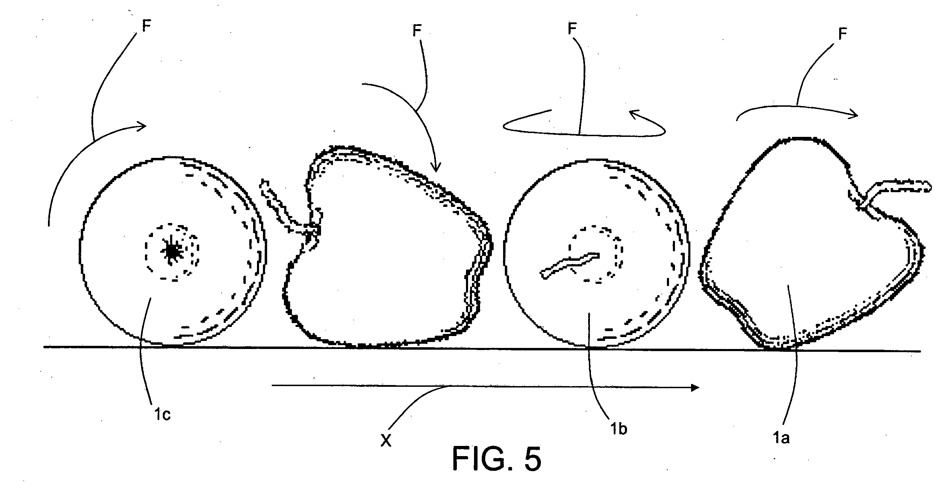

Figures 1 to 4 are top views of a moment of the feeding of the food products 1 in the direction indicated by the arrow X. In contrast, Figure 5 is a side view of several products which are also being fed in the direction X. Moreover, in this latter case, for each product a curved arrow F indicates a possible instantaneous direction of rotation. Although in said Figures the products are shown detached from each other, they may also be fed in contact with each other.

In general, product feed may be achieved using suitable feed means of the known type such as motor-driven roller conveyors or downfeed paths.

Moreover, preferably the method comprises an operating step of continuously checking the position of each product along the entire feed path, in such a way that the various food products 1 can be fed all together loosely spread out. This may be achieved, for example, using one or more television cameras which frame the products being fed and using a common tracking software based on processing of the images from the television cameras.

During feeding of the food products 1, and the consequent rolling, the method comprises an operating step of detecting the relative surface structure of each food product 1 at one or more of its surface portions 2. It should be noticed that for the purposes of this invention, the term surface portion 2 refers to a set of actual points of the surface of the food product 1, whilst the terms relative surface structure refers to the three-dimensional reading of the surface trend of a predetermined surface portion 2 or at least part of it. According to this invention, detection of each relative surface structure may be carried out by detecting all or only some of the points of the respective surface portion. In other words, with regard to a predetermined surface portion of the product it is possible to detect the three-dimensional trend only of a limited number of separate points and to obtain the others by interpolation, as well as detecting the trend of all of the adjacent points. Moreover, here and below the term "relative" surface structure is used with reference to a spatial reference system outside the food product 1 (in practice usually integral with the detection means used for that purpose or with the feed means used to move the food products 1). It should be noticed that if two reference systems are assigned, a first to the detection or feed means and a second to the food product 1, after feed and consequent rotation of the food product 1 the second reference system integral with it is subjected, relative to the first, to a set of movements and rotation.

The detection methods used may be any and are not described here in detail, being of the known kind. However, in the preferred embodiments detection is normally carried out by projecting a beam of light (preferably laser) on the surface of the food product 1 and practically instantly detecting the surface structure of the illuminated zone using the triangulation technique. In contrast, in other embodiments detection is performed by detecting from two or more different observation points the surface texture of the food product 1 (that is to say, its outer appearance). It is known that the three-dimensional appearance of an irregular object can be reconstructed according to how the outer appearance of the same zone of the surface of the object varies with variations in the reciprocal positioning between the point of observation (detection) and the zone of the surface detected (it should be noticed that detection of the texture described here is only used for detecting the three-dimensional structure and therefore unlike what is described below as an integral part of a more complete embodiment of this invention). In other embodiments, detection of the surface of the food product 1 may also be performed using the known "time of flight" technique, in which the position of the points of the surface is obtained by measuring the time taken by a light pulse to reach the food product 1 and return to a detection sensor (this technique is also not described in detail herein, since it is of the known type). Advantageously, in the known way, to check the entire surface of the food product 1 it is possible to use rotary mirrors combined with interferometric techniques. Figures 1 to 4 show top views of four possible embodiments for each detection step. Moreover, said Figures show how each detection step can simultaneously examine two or more food products 1.

In particular, in the case of Figures 1 to 3, each portion detected consists of the set of linear intersections between the surface of the food product 1 and a plurality of separate planes incident on it and indicated by thick lines 3 (in the accompanying drawings all of the planes are perpendicular to the plane of the drawing, but in general they could even be set at an angle to it). In particular, in the case of Figures 1 and 2 said separate planes are parallel with each other and, respectively, are substantially perpendicular to the feed direction X and set at an angle to it.

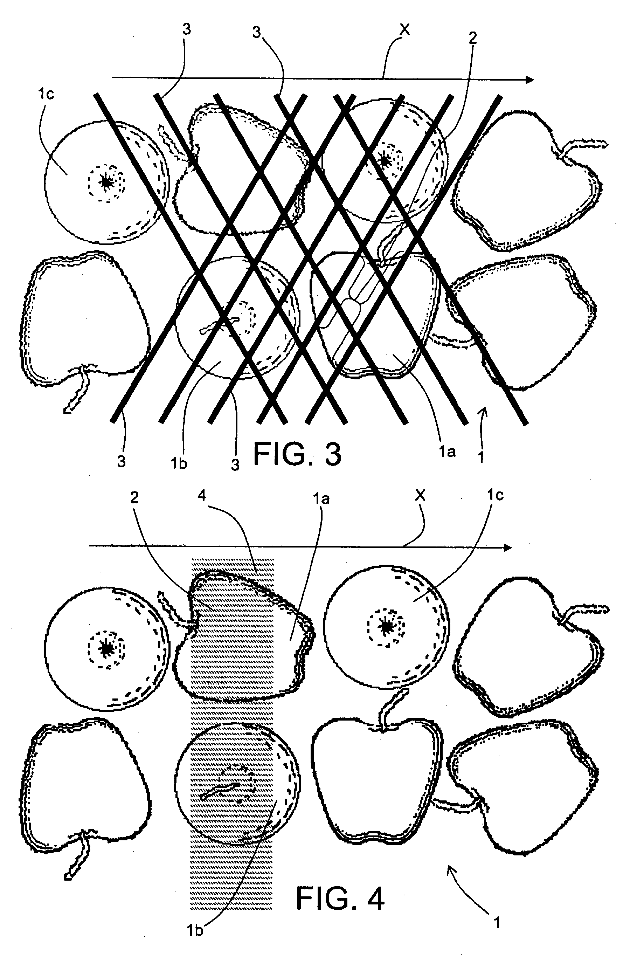

In contrast, in the case in Figure 3 the portion of the surface of the food product 1 detected consists of the linear intersection between the surface and a plurality of planes which are divided into a first group of planes that are parallel with each other and a second group of planes that are parallel with each other. The planes of the first group are also set at an angle to the planes of the second group. In this way, the portion of each food product 1 detected consists of a kind of grid with three-dimensional extension.

In contrast, in the case in Figure 4 each surface portion 2 consists of a three-dimensional band of the surface of the food product 1 2 (in the Figure the entire detection zone, covering more than one product, is indicated with dense, semi-transparent hatching 4).

Advantageously, as shown in the accompanying drawings, the detection step is carried out by examining an entire cross-section of the feed path, therefore at the same time detecting both one or more food products 1, and any zones of the feed means on which the food products 1 rest. Correct assignment of each profile detected to the respective food product 1 or to the feed means may then be carried out by means of calculation software of the known type.

In accordance with this invention, the grading method comprises repeating the detection step a plurality of times during food product 1 feed, so as to detect at least once the relative surface structure of surface portions 2 corresponding to at least most of the surface of each food product 1.

Moreover, the detection step must also be repeated in such a way that each surface portion 2 detected during each detection step shares at least several points with at least one other surface portion 2 detected in a different detection step.

Moreover, in accordance with a first embodiment, the detection step is repeated in such a way that each relative surface structure shares points with at least one other relative surface structure detected. This may be done, for example, by repeating the detection step in such a way that each detection step detects points of the surface of the food product 1 which are adjacent to those detected during the previous detection step. Therefore, advantageously, the detection step is repeated at preset time intervals, for example equal to the time on average taken by a food product 1 to be fed in the feed direction X covering a distance which is less than the width (parallel with the direction X) of the detection lines or areas.

In contrast, in accordance with a second embodiment, the overlap only involves the surface portions but not the corresponding relative surface structures. However, in this second operating method, the method comprises detection not just of the relative surface structures but also of the textures of the different surface portions 2 as is also described below, and the textures are detected in such a way that they are partly overlapping each other so that each of them shares at least several points with at least one other texture detected.

Moreover, in the embodiment illustrated, the method comprises all of the detection steps being carried out while observing the food product 1 from the same absolute position relative to the means for causing rotation. In contrast, in other embodiments, the method comprises all of the detection steps being carried out while simultaneously observing the food product 1 from a plurality of different points having a predetermined absolute position relative to the means for causing rotation.

In the former case, the step of making the food product 1 roll on its outer surface is preferably carried out in such a way as to make it turn over itself about a plurality of different axes of rotation. This is intended to prevent the food product 1 which in theory has a high level of axial symmetry (such as apples, tomatoes, etc.) from rotating about a single axis of rotation which coincides with their theoretical axis of symmetry. In the latter case, said measure is not usually necessary. Once the relative surface structures of surface portions corresponding at least to most of the surface of each food product 1 have been obtained, the method according to this invention comprises the operating step of combining the relative surface structures detected to reconstruct an overall surface structure of the food product 1. Said step of combining the relative surface structures is carried out in particular in such a way as to make the points shared by the various surface portions (whether they are points shared by the relative surface structures or the relative textures) coincide with each other in space.

Consequently, the combination step comprises the preliminary operating step of identifying the shared points.

In accordance with the first embodiment described above, this is done by comparing the relative surface structures. In accordance with said operating step, the points shared by two relative surface structures are identified as the points having the same relative positioning in said two relative surfaces structures (that is to say, relative to the same reference system integral with the food product 1). For example, the step of combining the relative surface structures may be carried out by taking the result of one detection step as the starting point and referring all others to it. In particular, once the starting relative structure has been set (and therefore the corresponding starting surface portion 2), it is possible to superpose on it the other relative structures corresponding to the surface portions 2 sharing points with the starting surface portion 2, making said shared points coincide. In other words, it involves fixing a reference system integral with the starting relative surface structure and transforming the coordinates of all of the other relative surface structures into coordinates belonging to said reference system. Each time, experts in the field will not have any difficulty identifying the transformation formulas to be applied by means of a comparison of the various relative surface structures detected.

Similarly, according to the second operating method described above, the preliminary operating step of identifying the shared points is carried out by comparing the textures detected for the different surface portions 2. The points shared by two surface portions 2 are identified as the points of the textures having the same relative positioning in the respective surface portions 2.

The operating step of determining the texture of each surface portion 2 detected may be also carried out for other purposes. As indicated above, determination of the texture is not carried out to determine in itself the three-dimensional geometry of each relative surface structure, but so as to be able to identify the points shared by the different surface portions detected as described above, or to help identify the points shared by the various relative surface structures.

Advantageously, this second possibility is useful for food products 1 which have very regular surfaces (such as apples), where two different relative structures may seem to have more than one possible reciprocal positioning. In such cases, thanks to the information about the texture, it is possible to identify the shared points partly based on a comparison of the textures identified for each surface portion 2. The points shared by two relative surface structures may be identified as the points which not only have the same relative spatial positioning in the two relative surface structures detected, but also the same texture point by point.

In other words, for example, if points a, b, c, d of a first relative surface structure have the same reciprocal spatial positioning as points A, B, C, D and points A', B', C', D' of a second relative surface structure, it is very unlikely that the colouring of points A, B, C, D will also be identical respectively to that of points A', B', C', D'. Consequently, it is possible to determine which points correspond to the starting points a, b, c, d, by comparing their colours (texture).

Advantageously, the textures are identified by measuring the colorimetric coordinates of each point of the portions detected. For example, a greyscale system may be used (in which case the information about each point is only one-dimensional) or a three-colour reference system such as the RGB system (in which case each point can be identified using three-dimensional colorimetric coordinates). Finally, it should be noticed that in cases in which the textures are to be determined, advantageously during the step of combining the relative surface structures detected, the textures of the various portions may also preferably be combined to obtain, together with the overall surface structure, an overall texture of the food product 1 (said information may be used to evaluate the quality of the food product 1 according to known methods).

Once the overall surface structure has been obtained, the method according to this invention comprises the grading of each food product 1 based on the overall surface structure.

For example, this may be done by estimating the overall volume of the food product 1 and grading it based on its volume. Or by estimating one or more dimensions which are representative of the food product 1 and grading it based on said one or more representative dimensions (in the case of an apple this may be the height and the equatorial diameter). Or, if it is available, evaluating the product overall texture.

Finally, the method according to this invention may also comprise, after the grading step, a step of automatic selection of the food products 1 based on the results of the grading step and the position check step. Indeed, if the position of the individual products is known and the respective grading, it is possible to control motor-driven means of the known type (such as motor-driven arms, mobile panels, jets of compressed air) to select the products of interest at the moment when they pass at a specific outfeed zone located along the feed path.
This invention brings important advantages.

Thanks to this invention it was possible to provide a method for accurate grading of food products based on their shape and size and/or texture.

Second, the method according to this invention may be implemented without having to interrupt normal product feed along existing operating lines.

It should also be noticed that this invention is relatively easy to produce and that even the cost linked to implementing the invention is not very high.

The invention described above may be modified and adapted in several ways without thereby departing from the scope of the claims.

## Claims

1. A method for grading substantially rigid food products able to roll on their outer surface, such as fruit and vegetables, comprising the operating steps of:
feeding each food product (1) along a movement path, also making it roll on its outer surface, causing it to rotate over itself about one or more axes of rotation;
during said feed step, detecting the relative surface structure of the food product (1) at one or more of its surface portions (2), each relative surface structure corresponding to several or all of the points of the respective surface portion (2);
repeating the detection step a plurality of times, for detecting at least once the relative surface structure of surface portions (2) corresponding to at least most of the surface of the food product (1), said repetition of the detection step being carried out in such a way that each surface portion (2), whose relative surface structure is detected during each detection step, shares at least several points with at least one other surface portion (2) whose relative surface structure is detected during a different detection step;
combining the relative surface structures detected to reconstruct an overall surface structure of the food product (1), said step of combining the relative surface structures being carried out in such a way that the points shared by the various surface portions (2) detected are made to coincide with each other in space; and
grading each food product (1) according to the overall surface structure detected;
**wherein**:
the repetition of the detection step is carried out in such a way that each relative surface structure detected shares at least several points with at least one other relative surface structure detected, and the step of combining the relative surface structures involves the prior operating step of identifying said shared points by comparing the relative surface structures; the points shared by two relative surface structures being identified as the points having the same relative positioning in said two relative surface structures; and/or
the method also comprises the operating step of identifying the texture of each surface portion (2) whose relative surface structure is detected; the repetition of the detection is carried out in such a way that each texture detected shares at least several points with at least one other texture detected; and
the step of identifying shared points is carried out based on a comparison of the textures identified for each surface portion (2); the points shared by two relative surface structures being identified as the points having the same relative positioning of the textures in said two relative surface structures.

2. The method according to claim 1, **characterised in that** the textures are identified by measuring the colorimetric coordinates of each point of the portions detected.

3. The method according to claim 1 or 2, **characterised in that** during the step of combining the relative surface structures detected to reconstruct an overall surface structure for the food product (1), the textures of the various portions are also combined to obtain an overall texture for the food product (1).

4. The method according to any of the foregoing claims, **characterised in that** the detection step is repeated in such a way that each detection step detects points of the surface of the food product (1) which are adjacent to those detected during the previous detection step.

5. The method according to any of the foregoing claims, **characterised in that** during each detection step a portion of the surface of the food product (1) is detected which consists of the linear intersection between the surface and a plurality of separate planes incident on it.

6. The method according to claim 5, **characterised in that** during each detection step a portion of the surface of the food product (1) is detected which consists of the linear intersection between the surface and a plurality of separate planes grouped in a first group and in a second group of planes which are parallel with each other, the planes of the first group being at an angle to the planes of the second group, so that the portion detected consists of a three-dimensional grid of lines.

7. The method according to any of the foregoing claims, **characterised in that** the step of making the food product (1) roll is carried out while supporting the food product (1) with means for making it rotate and also being **characterised in that** all of the detection steps are carried out while observing the food product (1) from the same absolute position relative to the means for making it rotate.

8. The method according to any of the claims from 1 to **6**, **characterised in that** the step of making the food product (1) roll is carried out while supporting the food product (1) with means for making it rotate and also being **characterised in that** all of the detection steps are carried out while observing the food product (1) from a plurality of different points having a predetermined absolute position relative to the means for making it rotate.

9. The method according to any of the foregoing claims, **characterised in that** the step of making the food product (1) roll is carried out in such a way as to make it rotate about a plurality of different axes of rotation.

10. The method according to any of the foregoing claims, **characterised in that** the grading step involves the steps of estimating the overall volume of the food product (1) and grading it according to the volume size.

11. The method according to any of the claims from 1 to 9, **characterised in that** the grading step involves the steps of estimating one or more dimensions which are representative of the food product (1) and grading it according to said one or more representative dimensions.

12. The method according to claim 3 and any of the others from 2 to 9, **characterised in that** the grading step is carried out according to the product texture.

13. The method according to any of the foregoing claims, **characterised in that** it also comprises an operating step of continuously checking the position of each product along the feed path.

14. The method according to claim 13, **characterised in that** it also comprises, after the grading step, a step of automatically directing food products (1) on two or more outfeed paths according to the results of the grading step and of the position check step.

## Patentansprüche

1. Verfahren zur Klassierung von im wesentlichen festen Lebensmittelprodukten, in der Lage, auf ihrer äusseren Oberfläche zu rollen, solche wie Obst und Gemüse, enthaltend die folgenden Betriebphasen:
- das Zuführen eines jeden Lebensmittelproduktes (1) entlang einer Vorlaufbahn, wobei deren Rollen um sich selbst um eine oder mehrere Drehachsen bewirkt wird;
- während der genannten Zuführphase das Abtasten der betreffenden Oberflächenstruktur des Lebensmittelproduktes (1) an einem oder mehreren seiner Oberflächenabschnitte (2), wobei jede betreffende Oberflächenstruktur mehreren oder allen Punkten des jeweiligen Oberflächenabschnittes (2) entspricht;
- mehrmalige Wiederholung der Abtastphase, um wenigstens einmal die betreffende Oberflächenstruktur der Oberflächenabschnitte (2) zu erfassen, die wenigstens dem grössten Teil der Oberfläche des Lebensmittelproduktes (1) entspricht, wobei die genannte Wiederholung der Abtastphase auf solche Weise ausgeführt wird, dass jeder Oberflächenabschnitt (2), dessen jeweilige Oberflächenstruktur während einer jeden Abtastphase erfasst worden ist, wenigstens mehrere Punkte mit wenigstens einem anderen Oberflächenabschnitt (2) gemeinsam hat, dessen betreffende Oberflächenstruktur während einer anderen Abtastphase abgetastet wurde;
- das Kombinieren der betreffenden abgetasteten Oberflächenstrukturen, um eine gesamte Oberflächenstruktur des Lebensmittelproduktes (1) zu rekonstruieren, wobei die genannte Phase des Kombinierens der betreffenden Oberflächenstrukturen auf solche Weise ausgeführt wird, dass die den verschiedenen abgetasteten Oberflächenabschnitten (2) gemeinsamen Punkte mit jedem anderen räumlich übereinstimmen; und
- Klassierung eines jeden Lebensmittelproduktes (1) in Übereinstimmung mit der gesamten abgetasteten Oberflächenstruktur; wobei:
- die Wiederholung der Abtastphase auf solche Weise ausgeführt wird, dass jede betreffende abgetastete Oberflächenstruktur wenigstens einige Punkte mit wenigstens einer anderen betreffenden abgetasteten Oberflächenstruktur gemeinsam hat, und die Phase des Kombinierens der betreffenden Oberflächenstrukturen die vorangehenden Betriebsphase des Erkennens der genannten gemeinsamen Punkte durch den Vergleich der betreffenden Oberflächenstrukturen miteinander einbezieht; wobei die zwei betreffenden Oberflächenstrukturen gemeinsamen Punkte als jene Punkte identifiziert werden, welche dieselbe entsprechende Positionierung in den genannten beiden betreffenden Oberflächenstrukturen aufweisen; und/oder
- das Verfahren enthält ebenfalls die Betriebsphase des Erkennens des Gewebes eines jeden Oberflächenabschnittes (2), dessen jeweilige Oberflächenstruktur abgetastet wurde; wobei die Wiederholung des Abtastens auf solche Weise ausgeführt wird, dass jedes abgetastete Gewebe wenigstens einige Punkte mit wenigstens einem anderen abgetasteten Gewebe gemeinsam hat; und
- die Phase des Erkennens der gemeinsamen Punkte ausgeführt wird, wobei er auf einem Vergleich der an jedem Oberflächenabschnitt (2) identifizierten Gewebe basiert; wobei die den beiden betreffenden Oberflächenstrukturen gemeinsamen Punkte als jene Punkte identifiziert werden, welche dieselbe entsprechende Positionierung des Gewebes in den genannten beiden betreffenden Oberflächenstrukturen haben.

2. Verfahren nach Patentanspruch 1, **dadurch gekennzeichnet, dass** die Gewebe durch das Messen der farbmetrischen Koordinaten eines jeden Punktes der abgetasteten Abschnitte identifiziert werden.

3. Verfahren nach Patentanspruch 1 oder 2, **dadurch gekennzeichnet, dass** während der Phase des Kombinierens der betreffenden abgetasteten Oberflächenstrukturen miteinander, um eine gesamte Oberflächenstruktur des Lebensmittelproduktes (1) zu rekonstruieren, ebenfalls die Gewebe der verschiedenen Abschnitte miteinander kombiniert werden, um ein gesamtes Gewebe des Lebensmittelproduktes (1) zu erhalten.

4. Verfahren nach einem jeden der vorstehenden Patentansprüche, **dadurch gekennzeichnet, dass** die Abtastphase auf solche Weise wiederholt wird, dass jede Abtastphase Punkte der Oberfläche des Lebensmittelproduktes (1) erfasst, welche an jene angrenzen, die während der vorangegangenen Abtastphase abgetastet wurden.

5. Verfahren nach einem jeden der vorstehenden Patentansprüche, **dadurch gekennzeichnet, dass** während einer jeden Abtastphase ein Abschnitt der Oberfläche des Lebensmittelproduktes (1) erfasst wird, welcher aus einer linearen Schnittstelle zwischen der Oberfläche und einer Anzahl von auf diese einfallenden getrennten Ebenen besteht.

6. Verfahren nach Patentanspruch 5, **dadurch gekennzeichnet, dass** während einer jeden Abtastphase ein Abschnitt der Oberfläche des Lebensmittelproduktes (1) erfasst wird, welcher aus einer linearen Schnittstelle zwischen der Oberfläche und einer Anzahl von auf diese einfallenden getrennten Ebenen besteht, zusammengefasst zu einer ersten Gruppe und einer zweiten Gruppe von Ebenen, die parallel zueinander verlaufen, wobei die Ebenen der ersten Gruppe in einem Winkel zu den Ebenen der zweiten Gruppe liegen, so dass der abgetastete Abschnitt aus einem dreidimensionalen Gitter besteht.

7. Verfahren nach einem jeden der vorstehenden Patentansprüche, **dadurch gekennzeichnet, dass** die Phase, in welcher das Lebensmittelprodukt (1) zum Rollen gebracht wird, ausgeführt wird, während das Lebensmittelprodukt (1) von den dieses zum Rollen bringenden Mitteln getragen ist, und ebenfalls **dadurch gekennzeichnet, dass** alle Abtastphasen ausgeführt werden, während das Lebensmittelprodukt (1) von der gleichen absoluten Position im Verhältnis zu den Mitteln zum Rollen desselben aus beobachtet wird.

8. Verfahren nach einem jeden der vorstehenden Patentansprüche von 1 bis 6, **dadurch gekennzeichnet, dass** die Phase, in welcher das Lebensmittelprodukt (1) zum Rollen gebracht wird, ausgeführt wird, während das Lebensmittelprodukt (1) von den dieses zum Rollen bringenden Mitteln getragen ist, und ebenfalls **dadurch gekennzeichnet, dass** alle Abtastphasen ausgeführt werden, während das Lebensmittelprodukt (1) von einer Anzahl verschiedener Punkte aus beobachtet wird, die eine vorgegebene absolute Position im Verhältnis zu den Mitteln zum Rollen desselben haben.

9. Verfahren nach einem jeden der vorstehenden Patentansprüche, **dadurch gekennzeichnet, dass** die Phase, in welcher das Lebensmittelprodukt (1) zum Rollen gebracht wird, auf solche Weise ausgeführt wird, dass dieses um eine Anzahl von unterschiedlichen Drehachsen gedreht wird.

10. Verfahren nach einem jeden der vorstehenden Patentansprüche, **dadurch gekennzeichnet, dass** die Klassierphase die Phasen des Schätzens des Gesamtvolumens des Lebensmittelproduktes (1) einbezieht und dieses nach der Grösse klassiert.

11. Verfahren nach einem jeden der vorstehenden Patentansprüche von 1 bis 9, **dadurch gekennzeichnet, dass** die Klassierphase die Phase des Schätzens von einer oder mehreren Abmessungen einbezieht, welche für das Lebensmittelprodukt (1) typisch sind, und dieses nach der genannten einen oder mehreren typischen Abmessungen klassiert.

12. Verfahren nach Patentanspruch 3 und nach jedem der anderen von 2 bis 9, **dadurch gekennzeichnet, dass** die Klassierphase in Übereinstimmung mit dem Produktgewebe ausgeführt wird.

13. Verfahren nach einem jeden der vorstehenden Patentansprüche, **dadurch gekennzeichnet, dass** es ebenfalls die Betriebsphase der kontinuierlichen Kontrolle der Position eines jeden Produktes entlang der Zuführbahn enthält.

14. Verfahren nach Patentanspruch 13, **dadurch gekennzeichnet, dass** es nach der Klassierphase ebenfalls eine Phase der automatischen Weiterleitung des Lebensmittelproduktes (1) zu zwei oder mehreren Ausstossbahnen enthält, und zwar je nach den Ergebnissen der Klassierphase und der Phase der Positionskontrolle.

## Revendications

1. Un procédé pour classer des produits alimentaires essentiellement rigides aptes à rouler sur leur surface extérieure, tels que certains genres de fruits et légumes, comprenant les phases opérationnelles consistant à :
faire avancer chaque produit alimentaire (1) le long d'un parcours de transport, en le faisant aussi rouler sur sa surface extérieure, afin de le faire tourner sur lui-même autour d'un ou de plusieurs axes de rotation ;
pendant ladite phase d'avance, détecter la structure superficielle relative du produit alimentaire (1) au niveau d'une ou de plusieurs de ses portions superficielles (2), chaque structure superficielle relative correspondant à plusieurs ou à tous les points de la portion superficielle (2) respective ;
répéter la phase de détection une pluralité de fois, pour détecter au moins une fois la structure superficielle relative de portions superficielles (2) correspondant au moins à la plus grande partie de la surface du produit alimentaire (1), ladite répétition de la phase de détection étant effectuée de manière à ce que chaque portion superficielle (2), dont la structure superficielle relative est détectée pendant chaque phase de détection, ait au moins plusieurs points communs avec au moins une autre portion superficielle (2) dont la structure superficielle relative est détectée pendant une autre phase de détection ;
combiner les structures superficielles relatives détectées pour reconstruire une structure superficielle d'ensemble du produit alimentaire (1), ladite phase consistant à combiner les structures superficielles relatives étant effectuée de manière à faire coïncider entre eux dans l'espace les points communs aux différentes portions superficielles (2) détectées ; et
classer chaque produit alimentaire (1) en fonction de la structure superficielle d'ensemble détectée ;
**caractérisé en ce que** :
la répétition de la phase de détection est effectuée de manière à ce que chaque structure superficielle relative détectée ait au moins plusieurs points communs avec au moins une autre structure superficielle relative détectée, et **en ce que** la phase consistant à combiner les structures superficielles relatives prévoit la phase opérationnelle préalable consistant à identifier lesdits points communs en comparant les structures superficielles relatives ; les points communs à deux structures superficielles relatives étant identifiés comme étant les points ayant le même positionnement relatif dans lesdites deux structures superficielles relatives ;
et/ou
le procédé comprend aussi la phase opérationnelle consistant à identifier la texture de chaque portion superficielle (2) dont la structure superficielle relative est détectée ; la répétition de la détection est effectuée de manière à ce que chaque texture détectée ait au moins plusieurs points communs avec au moins une autre texture détectée ; et
la phase consistant à identifier les points communs est effectuée sur la base d'une comparaison des textures identifiées pour chaque portion superficielle (2) ; les points communs à deux structures superficielles relatives étant identifiés comme étant les points ayant le même positionnement relatif des textures dans lesdites deux structures superficielles relatives.

2. Le procédé selon la revendication 1, **caractérisé en ce que** les textures sont identifiées en mesurant les coordonnées colorimétriques de chaque point des portions détectées.

3. Le procédé selon la revendication 1 ou 2, **caractérisé en ce que**, pendant la phase consistant à combiner les structures superficielles relatives détectées pour reconstruire une structure superficielle d'ensemble du produit alimentaire (1), les textures des différentes portions sont également combinées pour obtenir une texture d'ensemble du produit alimentaire (1).

4. Le procédé selon l'une quelconque des revendications précédentes, **caractérisé en ce que** la phase de détection est répétée de manière à ce que chaque phase de détection détecte des points de la surface du produit alimentaire (1) qui sont adjacents à ceux détectés pendant la phase de détection précédente.

5. Le procédé selon l'une quelconque des revendications précédentes, **caractérisé en ce que**, pendant chaque phase de détection, une portion de la surface du produit alimentaire (1) est détectée, qui est constituée par l'intersection linéaire entre la surface et une pluralité de plans distincts incidents sur celle-ci.

6. Le procédé selon la revendication 5, **caractérisé en ce que**, pendant chaque phase de détection, une portion de la surface du produit alimentaire (1) est détectée, qui est constituée par l'intersection linéaire entre la surface et une pluralité de plans distincts regroupés dans un premier groupe et dans un deuxième groupe de plans qui sont parallèles entre eux, les plans du premier groupe étant inclinés par rapport aux plans du deuxième groupe, de telle sorte que la portion détectée est constituée par une grille tridimensionnelle de lignes.

7. Le procédé selon l'une quelconque des revendications précédentes, **caractérisé en ce que** la phase consistant à faire rouler le produit alimentaire (1) est effectuée tout en supportant le produit alimentaire (1) lui-même avec des moyens destinés à le faire tourner et étant aussi **caractérisé en ce que** toutes les phases de détection sont effectuées en observant le produit alimentaire (1) de la même position absolue par rapport auxdits moyens destinés à le faire tourner.

8. Le procédé selon l'une quelconque des revendications de 1 à 6, **caractérisé en ce que** la phase consistant à faire rouler le produit alimentaire (1) est effectuée tout en supportant le produit alimentaire (1) lui-même avec des moyens destinés à le faire tourner et étant aussi **caractérisé en ce que** toutes les phases de détection sont effectuées en observant le produit alimentaire (1) d'une pluralité de points différents ayant une position absolue prédéfinie par rapport auxdits moyens destinés à le faire tourner.

9. Le procédé selon l'une quelconque des revendications précédentes, **caractérisé en ce que** la phase consistant à faire rouler le produit alimentaire (1) est effectuée de manière à le faire tourner autour d'une pluralité d'axes de rotation différents.

10. Le procédé selon l'une quelconque des revendications précédentes, **caractérisé en ce que** la phase de classement prévoit les phases consistant à estimer le volume d'ensemble du produit alimentaire (1) et à le classer en fonction de la taille de volume.

11. Le procédé selon l'une quelconque des revendications de 1 à 9, **caractérisé en ce que** la phase de classement prévoit les phases consistant à estimer une ou plusieurs dimensions qui sont représentatives du produit alimentaire (1) et à le classer en fonction de ladite une ou desdites plusieurs dimensions représentatives.

12. Le procédé selon la revendication 3 et l'une quelconque des autres revendications de 2 à 9, **caractérisé en ce que** la phase de classement est effectuée en fonction de la texture du produit.

13. Le procédé selon l'une quelconque des revendications précédentes, **caractérisé en ce qu'**il comprend aussi une phase opérationnelle consistant à contrôler en continu la position de chaque produit le long du parcours d'avance.

14. Le procédé selon la revendication 13, **caractérisé en ce qu'**il comprend aussi, après la phase de classement, une phase consistant à diriger automatiquement les produits alimentaires (1) sur deux, ou plus, parcours de sortie en fonction des résultats de la phase de classement et de la phase de contrôle de la position.
